# EUROPEAN PATENT APPLICATION

(11) **EP 2 916 493 A1**
(43) Date of publication of application: **09.09.2015**
(21) Application number: 14158153.8
(22) Date of filing: 06.03.2014
(51) Int. Cl.: H04L 12/58

(54) **Method and system for transmitting a message**

(71) Applicant: Postex Platform B.V., 1082 MS Amsterdam (NL)
(72) Inventor: Hoeflake, Cornelis Bastiaan, 1082 MS Amsterdam (NL); De Fouw, Johannes Alexander, 1082 MS Amsterdam (NL); De Wilde, Marinus Cornelis, 1082 MS Amsterdam (NL)
(74) Representative: Engelfriet, Arnoud Peter

(57) **Abstract**

A method of transmitting a message from a sender to a recipient. In case the recipient's choice for medium is not yet known or the recipient has not chosen for electronic transmission: the message is transmitted on a physical carrier such as by letter in envelope, where the physical carrier is provided with a code referring to an electronic copy of the message, and upon receipt of the code at a server, the server registers the registers a choice by the recipient for electronic transmission or not. In case the recipient has chosen for electronic transmission: the message is transmitted via electronic transmission. Also a system and a server for use in such a system.

## Description

### FIELD OF THE INVENTION

The invention relates to a method of and system for transmitting a message from a sender to a recipient, as well as a server for use in the method and a computer program product.

### BACKGROUND OF THE INVENTION

Despite the enormous popularity of e-mail and other forms of electronic communication, communication via physical carriers such as postal mail remains an important aspect of both private and business life. In 2011 for example over 70 billion items of mail were being delivered in Europe alone.

Physical carrier message transmission comes with a significant cost, both for the sender and for the recipient. Electronic message transmission in contrast is virtually free of charge and thus very much preferred. However, due to various reasons many businesses still send out paper mail, even when the message was created electronically and even when the recipient is likely to want to electronically process the message.

For example, few companies today draw up or book invoices on paper, yet the majority of invoices is being sent on paper. This implies that the sender creates an electronic invoice, prints it and sends the printout via paper mail to the recipient. The recipient next scans the printout and laboriously copies the details into its accounting system.

An important reason why this kind of thing is still happening, is that it is not straightforward how to establish that electronic communication is preferred over paper mail. Organizations may be too large or opaque to identify the person to indicate this preference to, in particular for the persons working in the mail department. One may of course make phone calls or exchange e-mails with the other party to work out the preference, but this takes time and is error-prone. There thus is a need for a method and system that (likely) decreases the number of postal messages being sent in favour of the number of electronic messages.

### SUMMARY OF THE INVENTION

The invention provides a method as per the preamble, which aims to simplify the process of establishing a preference for electronic or paper transmission of messages and thereby is likely to decrease the number of postal messages being sent in favour of the number of electronic messages.

The invention achieves this aim by distinguishing between the case that the recipient's choice for medium is not yet known or the recipient has not chosen for electronic transmission, and the case that the recipient has chosen for electronic transmission. In the first case, the message is transmitted on a physical carrier such as by letter in envelope, where the physical carrier is provided with a code referring to an electronic copy of the message. Upon receipt of the code at a server, the server registers a choice by the recipient for electronic transmission or not. And in the second case, the message is transmitted via electronic transmission.

By providing the code with the physical carrier, e.g. on a letter inside an envelope, and providing the server that can process the code to register the choice, it becomes extremely easy for a recipient to establish the preference for electronic or paper transmission. As electronic transmission is the likely preferred option, the method thus is likely to decrease the number of postal messages being sent in favour of the number of electronic messages.

In an embodiment the sender transmits an electronic copy of the message to the server and the server initiates the transmission on the physical carrier in the case the recipient's choice for medium is not yet known or has not chosen for electronic transmission, as well as the electronic transmission in the case the recipient has chosen for electronic transmission. This embodiment advantageously centralizes the determination process of the recipient's preference and ensures that the sender does not need to transmit paper at all anymore.

In a further embodiment the code comprises the necessary recipient address details in an encoded form. With code schemes such as ISO/IEC 18004:2006 ("QR code") a significant amount of information can be provided in a code. This embodiment provides a security advantage: the server does not need to store all address details of all recipients in advance.

In an alternative embodiment the code comprises a reference to recipient address details stored in a database accessible to the server. This allows the use of small, short codes, for example numeric or alphanumeric codes that the recipient can enter manually into a computer to provide the same to the server.

In a further embodiment the code comprises a timestamp, and the server refuses to register the recipient's choice if the timestamp is older than a predefined moment in time. This embodiment prevents a preference registration to be made based on an outdated piece of mail. This is useful because the address information or the nature of communication may have changed, rendering the choice obsolete or contradictory to later-established business processes.

The invention further provides a system for the same goal. The system comprises, a) a determining computer system configured for determining whether the recipient has chosen for electronic transmission or not, and if so: for causing transmission of the message via electronic transmission; if not: for creating a copy of the message on a physical carrier, where the physical carrier is provided with a code referring to an electronic copy of the message, and for causing transmission of the message on the physical carrier, b) at the recipient, a computer system configured for processing the code provided with the physical carrier, and for contacting a remote server and transmitting the code thereto, c) the remote server being configured for, upon receipt of the code, registering a choice by the recipient for electronic transmission or not.

With this system any two organizations can easily work out their preferences for electronic or paper communication. As explained above, this approach is likely to decrease the number of postal messages being sent in favour of the number of electronic messages.

In an embodiment, at the sender, a computer system is configured for transmitting an electronic copy of the message to the determining computer and this system initiates the transmission on the physical carrier in the case the recipient's choice for a medium is not yet known or has not chosen for electronic transmission, as well as the electronic transmission in the case the recipient has chosen for electronic transmission.

The invention further provides for a server for use in the method of the invention, being configured for receiving the code from a recipient, and for registering a choice by the recipient for electronic transmission or not.

The invention further provides for a computer-readable storage medium comprising executable code for causing a computer to operate as the server of the invention.

### BRIEF DESCRIPTION OF THE FIGURES

The invention will now be explained in more detail with reference to the figures, in which:
Fig. 1 schematically illustrates an overview of the system of the invention;
Fig. 2 shows a first example physical carrier comprising a code as used by the invention; and
Fig. 3 shows a second example physical carrier comprising a code as used by the invention.

In the figures, same reference numbers indicate same or similar features. In cases where plural identical features, objects or items are shown, reference numerals are provided only for a representative sample so as to not affect clarity of the figures.

### DETAILED DESCRIPTION OF CERTAIN EMBODIMENTS

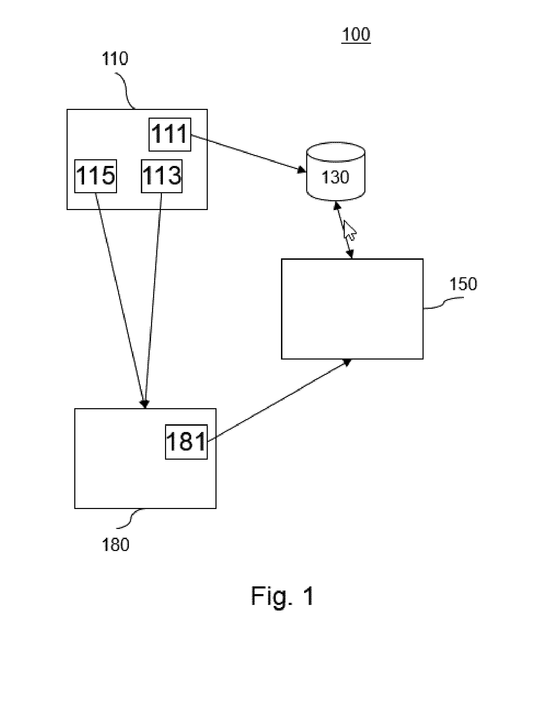

Fig. 1 schematically illustrates an overview of the system 100 of the invention. The system 100 comprises three main entities: a sender 110, a recipient 180 and a remote server 150.

The sender 110 wishes to transmit a message to the recipient 180. In accordance with the invention, the first act is to determine if the recipient has chosen electronic transmission or not. The embodiment shown provides for a registration database 130 where such choices are recorded. The sender 110 may make this determination itself, in which case computer system 111 at the sender 110 consults the registration database 130 and obtains the choice of the recipient. Consultation may be done by a remote database query.

Alternatively, as discussed below, the sender 110 can leave the determination up to a third party, the remote server 150. In such embodiments the sender 110 transmits the message to the third party, and the third party takes care of the actual transmission, either electronic or on paper, to the intended recipient 180.

In embodiments where the sender 110 makes the determination, if the choice is for electronic transmission, the sender 110 activates mailing system 113 transmission of the message via electronic transmission to the recipient 180. If instead the choice is for transmission via physical carrier, postal system 115 creates a copy of the message on a physical carrier and causes transmission of the message on the physical carrier to the recipient 180, e.g. by mailing through the national postal service or a delivery service. In accordance with the invention the physical carrier is provided with an code referring to an electronic copy of the message. This code is related to the recipient 180 in some manner, as discussed below. The code may be determined by the sender 110 itself or be requested by the sender 110 from a third party, the remote server 150. In both cases, the sender 110 typically provides the recipient address details to the remote server 150 to create an association between the recipient and the code. Where the code itself comprises the recipient address details, as may be possible with a QR code or the like, this is not necessary. Database 130 may be local to the sender 110 or be remote, e.g. accessible over the internet. An advantage of the latter situation is that the database 130 may be shared by multiple entities such as sender 110 and recipient 180. In such a case accommodation could be made for registering plural choices by a particular recipient: a recipient may wish to receive paper mail from one sender and electronic mail from another sender.

In general, it may be desirable to register the choice at a more fine-grained level. A recipient may wish to receive particular types of messages in physical form and others in electronic form.

In an alternative embodiment, the determination may be made by remote server 150. In this embodiment, the sender 110 transmits a copy of the message to the remote server 150. This copy is preferably electronic, e.g. an Adobe PDF document or a Microsoft Word document, but may also be on paper. The latter case has the advantage that the sender 110 can use its standard business processes for sending letters (just with a different address) but does create a chance for needless printing & scanning of information.

Upon receipt of the message, the server 150 consults the registration database 130 and initiates the transmission via physical carrier in the case the choice by recipient 180 is not yet known or the recipient 180 has not chosen for electronic transmission, as well as the electronic transmission in the case the recipient 180 has chosen for electronic transmission. Mailing system 113 and postal system 115 would then be integrated into server 150.

Server 150 is responsible for providing the code referring to the electronic copy of the message with the physical carrier. This code could be affixed onto a paper envelope or on a separate card in the envelope for example, or on a printed copy of the message as created by server 150.When using electronic transmission, the server 150 may also provide a code referring to the message. This code can be used by the recipient to turn its preference for electronic transmission into a preference for paper transmission.

When sending postal mail, the server 150 needs to know the address where to send the message to. The sender 110 could communicate this information, e.g. by manually typing in the postal address when sending an electronic copy of the message. The server 150 could also acquire the information itself, e.g. by scanning the mail address from a paper copy of the message and applying Optical Character Recognition (OCR) or by analyzing the electronic copy for blocks of text likely to be an address. For letters, for example, such block of text would be customarily at the top of the document. A database of all known postal addresses could be used to confirm the acquired information.

The server 150 might prescribe certain identifiers or codes to be used in the address to ease the acquisition, such as "A: Rokin 1, P: 1000 AA, C: Amsterdam" to identify an address A, a postal code P and a city C.

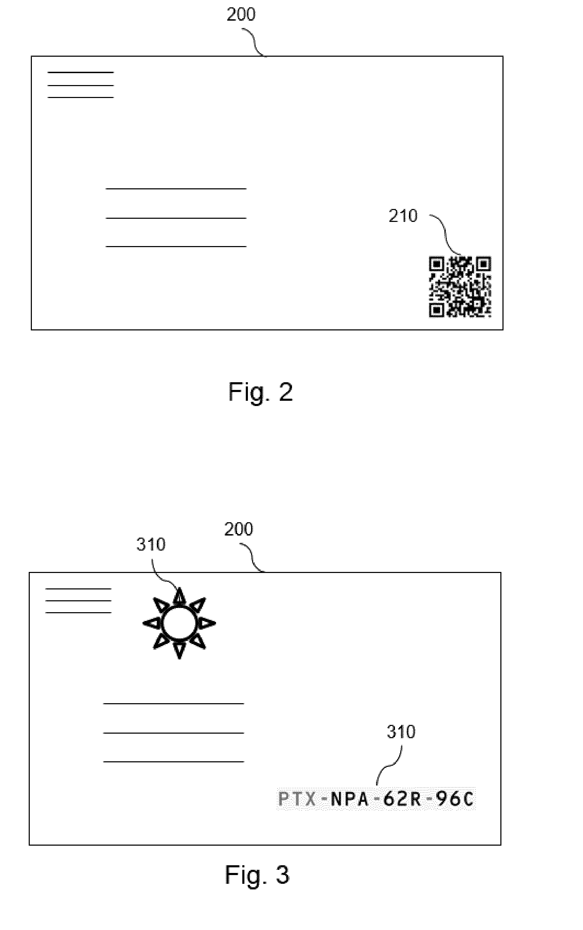

When creating postal mail from an electronic message, or when sending out the electronic copy of the message, the server 150 may add identifying information relating to the sender to the message. For example, a logo for the sender may be added for branding or marketing purposes, as shown in Fig. 3 below.

At the recipient 180, the message is received either electronically or via physical mail. In the former case, processing of the message is done as usual. For the latter case, a computer system 181 is provided that is configured for processing the code provided with the physical carrier, and for contacting the remote server 150 and transmitting the code thereto. This act of contacting initiates the registration process of the recipient and its choice for electronic or paper delivery of messages. The recipient may be offered a reward or other incentive for choosing electronic delivery.

Preferably upon registration of the choice for electronic delivery, an electronic copy of the message is immediately transmitted to the recipient. This allows the recipient 180 to discard the physical carrier, saving the laborious step of scanning or otherwise manually processing physical mail into an electronic document for further processing.

The remote server 150 is configured for, upon receipt of the code, registering the recipient in database 130 and for registering a choice by the recipient for electronic transmission or not. Generally this means the recipient has to provide certain identifying information, such as its business name, Chamber of Commerce registration and/or postal mail address. The recipient further has to provide an electronic transmission address, such as an e-mail address, and of course the choice for the electronic transmission.

The electronic transmission address is preferably validated after provision, for example by sending a confirmation e-mail with a special code or hyperlink that the owner of the corresponding mailbox needs to activate before the address can be used for electronic delivery.

Instead of e-mail other electronic communication channels may be used, depending on the type of message and the preferences of the recipient. For example, one may use Facebook or LinkedIn private messages, SMS or MMS communication or even fax communication. In the embodiment where the remote server 150 provides for electronic transmission of the message, the mechanism chosen may be to store the message on a Web-accessible location, allowing access by the recipient 180 over the Web rather than through the less reliable e-mail channel. The electronic message as communicated to the recipient 180 then merely provides a reference, such as a hyperlink, to the Web-accessible location.

For convenience the remote server 150 may maintain accounts for recipients, allowing them to access plural registrations of choices for electronic transmission or not. A recipient can then for example register the desire for paper mail from one sender, a choice for e-mail from another sender and a choice for web-based delivery from a third sender.

Preferably, the remote server 150 upon registration delivers an electronic copy of the message to the recipient 180. This usually requires cooperation with the sender 110. Such delivery may be done via e-mail or by offering a download of the copy from the remote server 150 (or a third-party server). The latter has the advantage that the download can be tracked more easily for statistical purposes.

In a further embodiment the recipient 180 may be offered the choice not only for paper versus electronic but also for paper as well as electronic. This third option provides the recipient 180 with more certainty that the message will arrive, as well as the ease of having electronic copies of messages for faster processing. The recipient 180 would then need to be able to recognize that paper messages are copies of already-received electronic messages, otherwise double processing of the message may occur.

Should the server 150 note that an electronic delivery has failed, the server 150 may as a fallback send out a paper copy as noted above. Electronic delivery is more prone to failure than paper delivery, and in some cases, e.g. invoices or legal notices, ensuring delivery is important.

Fig. 2 shows an example physical carrier 200 comprising a code 210 as used by the invention. The carrier 200 shown is a physical card that provides for sender and recipient identification, which is suitable for placing in any envelope of well-known make and model. Of course the carrier could equally well be a document of item wrapped in packing paper or bag, for example.

Alternatively the code 210 can be affixed to the envelope or other outside part of the carrier. In some cases carrier and content go as one, as with the well-known postcard. However this carries a serious security risk: a third party that sees the code, may subsequently pretend to be the recipient 180 and provide false information. If this risk can be mitigated, then this embodiment may be preferable.

The carrier 200 comprises next to various common elements a code 210, here shown as a QR code. The code 210 is machine-readable using commonly available scanners and other devices, such as smartphones with QR code scanning applications or apps. As an alternative to a QR code one may also use for example the Aztec Code as disclosed in US patent 5,591,956, the Data Matrix code as disclosed in US patent 5,612,524 and the MaxiCode as defined in ISO/IEC 16023:2000. Some alternatives with color offer even more capacity for storing information. See for instance the High Capacity Color Barcode Technology as developed by Microsoft Corporation, <http://research.microsoft.com/en-us/projects/hccb/>, or the Color C Code developed by Computech Inc, <http://colorccode.net>.

The above examples of codes are printed and machine readable. One may also use electronic codes, e.g. a Radio-Frequency Identifier or RFID label or tag that comprises the code with the information. An operator then needs to use a scanner or reader to extract the code from the tag. RFID and similar technologies, such as Near-Field Communication (NFC), have the advantage that they are easier to process, in particular in batch, at a slight increase in cost: it is usually cheaper to print a barcode than to affix an RFID tag.

Fig. 3 schematically illustrates an alternative embodiment of the code as used by the invention. In this embodiment, a human-readable code 310 is provided. This code is chosen arbitrarily. The code in this embodiment comprises 9 alphanumeric characters, providing a radix of 30 and a total code space of 19.683.000.000.000 codes. One may of course use more or fewer characters as desired. Further, the carrier shown in Fig. 3 comprises a logo 300 for marketing purposes, as discussed above.

The base number for the code is generated by a pseudo secure random number generator. If the generated random number is already in use, a new one is generated until the number is found to be new. Next, that number is printed as a number with a radix of 30 with the given characters.

The code may comprise a variety of data depending on the embodiment of the invention.

In a first embodiment of this aspect, the code comprises the recipient address details necessary for registration in an encoded form. This embodiment is useful because it saves the recipient 180 from entering this information itself upon registration with remote server 150. However it does require a coding scheme that can accommodate the necessary information. As an alternative, the code may comprise a reference to recipient address details stored in a database accessible to the remote server 150. This database could be database 130 or another database, for example a business register such as the Chamber of Commerce. Where database 130 is used, the reference could be simply to the address as extracted when creating the physical copy of the message.

In a further embodiment the code comprises a timestamp, and the server refuses to register the recipient's choice if the timestamp is older than a predefined moment in time. The timestamp provides an indication of when the message was sent via physical carrier.

### CLOSING NOTES

The above provides a description of several useful embodiments that serve to illustrate and describe the invention. The description is not intended to be an exhaustive description of all possible ways in which the invention can be implemented or used. The skilled person will be able to think of many modifications and variations that still rely on the essential features of the invention as presented in the claims. In addition, well-known methods, procedures, components, and circuits have not been described in detail.

Some or all aspects of the invention may be implemented in a computer program product, i.e. a collection of computer program instructions stored on a computer readable storage device for execution by a computer. The instructions of the present invention may be in any interpretable or executable code mechanism, including but not limited to scripts, interpretable programs, dynamic link libraries (DLLs) or Java classes. The instructions can be provided as complete executable programs, as modifications to existing programs or extensions ("plugins") for existing programs. Moreover, parts of the processing of the present invention may be distributed over multiple computers or processors for better performance, reliability, and/or cost.

Storage devices suitable for storing computer program instructions include all forms of non-volatile memory, including by way of example semiconductor memory devices, such as EPROM, EEPROM, and flash memory devices, magnetic disks such as the internal and external hard disk drives and removable disks, magneto-optical disks and CD-ROM disks. The computer program product can be distributed on such a storage device, or may be offered for download through HTTP, FTP or similar mechanism using a server connected to a network such as the Internet. Transmission of the computer program product by e-mail is of course also possible.

When constructing or interpreting the claims, any mention of reference signs shall not be regarded as a limitation of the claimed feature to the referenced feature or embodiment. The use of the word "comprising" in the claims does not exclude the presence of other features than claimed in a system, product or method implementing the invention. Any reference to a claim feature in the singular shall not exclude the presence of a plurality of this feature. The word "means" in a claim can refer to a single means or to plural means for providing the indicated function.

## Claims

1. A method of transmitting a message from a sender to a recipient, comprising,
in case the recipient's choice for medium is not yet known or the recipient has not chosen for electronic transmission: transmitting the message on a physical carrier such as by letter in envelope, where the physical carrier is provided with a code referring to an electronic copy of the message,
upon receipt of the code at a server, registering a choice by the recipient for electronic transmission or not,
in case the recipient has chosen for electronic transmission: transmitting the message via electronic transmission.

2. The method of claim 1, in which the sender transmits an electronic copy of the message to the server and the server initiates the transmission on the physical carrier in the case the recipient's choice for medium is not yet known or the recipient has not chosen for electronic transmission, as well as the electronic transmission in the case the recipient has chosen for electronic transmission.

3. The method of claim 2, in which in case the recipient has chosen for electronic transmission: transmitting the message via electronic transmission from the sender to the server and subsequently from the server to the recipient.

4. The method of claim 1, in which the code comprises the necessary recipient contact details in an encoded form.

5. The method of claim 1, in which the code comprises a reference to recipient contact details stored in a database accessible to the server.

6. The method of claim 1, in which the code comprises a timestamp, and the server refuses to register the recipient's choice if the timestamp is older than a predefined moment in time.

7. A system for transmitting a message from a sender to a recipient, comprising
a determining computer system configured for determining whether the recipient has chosen for electronic transmission or not, and
if so: for causing transmission of the message via electronic transmission
if not: for creating a copy of the message on a physical carrier, where the physical carrier is provided with an code referring to an electronic copy of the message, and for causing transmission of the message on the physical carrier,
at the recipient, a computer system configured for processing the code provided with the physical carrier, and for contacting a remote server and transmitting the code thereto,
the remote server being configured for, upon receipt of the code, registering a choice by the recipient for electronic transmission or not.

8. The system of claim 7, in which, at the sender, a computer system is configured for transmitting an electronic copy of the message to the determining computer and this system initiates the transmission on the physical carrier in the case the recipient has not chosen for electronic transmission, as well as the electronic transmission in the case the recipient has chosen for electronic transmission.

9. A server for use in the method of claim 1, being configured for receiving the code from a recipient, and for registering a choice by the recipient for electronic transmission or not.

10. A computer-readable storage medium comprising executable code for causing a computer to operate as the server of claim 9.

## Amended claims

### Amended claims in accordance with Rule 137(2) EPC.

1. A method of transmitting a message from a sender to a recipient, comprising,
in case the recipient's choice for medium is not yet known or the recipient has not chosen for electronic transmission: transmitting the message on a physical carrier such as by letter in envelope, where the physical carrier is provided with a code referring to an electronic copy of the message,
upon receipt of the code at a server, registering the recipient and a choice by the recipient for electronic transmission or not,
in case the recipient has chosen for electronic transmission: transmitting the message via electronic transmission.

2. The method of claim 1, in which the sender transmits an electronic copy of the message to the server and the server initiates the transmission on the physical carrier in the case the recipient's choice for medium is not yet known or the recipient has not chosen for electronic transmission, as well as the electronic transmission in the case the recipient has chosen for electronic transmission.

3. The method of claim 2, in which in case the recipient has chosen for electronic transmission: transmitting the message via electronic transmission from the sender to the server and subsequently from the server to the recipient.

4. The method of claim 1, in which the code comprises the necessary recipient contact details in an encoded form.

5. The method of claim 1, in which the code comprises a reference to recipient contact details stored in a database accessible to the server.

6. The method of claim 1, in which the code comprises a timestamp, and the server refuses to register the recipient's choice if the timestamp is older than a predefined moment in time.

7. A system for transmitting a message from a sender to a recipient, comprising
a determining computer system configured for determining whether the recipient has chosen for electronic transmission or not, and
if so: for causing transmission of the message via electronic transmission
if not: for creating a copy of the message on a physical carrier, where the physical carrier is provided with an code referring to an electronic copy of the message, and for causing transmission of the message on the physical carrier,
at the recipient, a computer system configured for processing the code provided with the physical carrier, and for contacting a remote server and transmitting the code thereto,
the remote server being configured for, upon receipt of the code, registering the recipient and a choice by the recipient for electronic transmission or not.

8. The system of claim 7, in which, at the sender, a computer system is configured for transmitting an electronic copy of the message to the determining computer and this system initiates the transmission on the physical carrier in the case the recipient has not chosen for electronic transmission, as well as the electronic transmission in the case the recipient has chosen for electronic transmission.

9. A server for use in the method of claim 1, being configured for receiving the code from a recipient, and for registering a choice by the recipient for electronic transmission or not.

10. A computer-readable storage medium comprising executable code for causing a computer to operate as the server of claim 9.
